# EUROPEAN PATENT SPECIFICATION

(11) **EP 1 460 323 B1**
(45) Date of publication and mention of the grant of the patent: **11.07.2007**
(21) Application number: 04075823.7
(22) Date of filing: 12.03.2004
(51) Int. Cl.: F16L 3/11

(54) **Pipe hanger**
Rohrabhängung
Support pour tuyaux

(30) Priority: 19.03.2003 NL 1022973
(43) Date of publication of application: 22.09.2004
(73) Proprietor: J. van Walraven Holding B.V., 3641 RK Mijdrecht (NL)
(72) Inventor: van Walraven, Jan, 3641 GP Mijdrecht (NL)
(74) Representative: Brookhuis, Hendrik Jan Arnold

(56) References cited:
- DE-A- 3 230 800
- DE-U- 9 211 062
- US-A- 4 101 103

## Description

The invention relates to a pipe hanger in accordance with the preamble of claim 1.

US 4,004,767 has disclosed a pipe hanger which is to be secured to a support and comprises a securing element which is designed to be secured to the support, in particular a ceiling or the like, and a hanger element which is substantially U-shaped and has two limbs by means of which the hanger element can be coupled to the securing element. A pipe or the like which is hung using a pipe hanger of this type is supported by the U-shaped hanger element, with the pipe or the like resting in the U shape.

The coupling between each limb of the hanger element and the securing element comprises a hook connection, for which purpose, in the known pipe hanger, a round opening and a slot which connects the opening to the end of the limb are arranged in both limbs of the hanger element, with the slot running in the longitudinal direction of the limb.

For the hanger element to be coupled to the securing element, the hanger element - in a position which is rotated through approximately 90 degrees with respect to its end position - has to be pushed onto the securing element by means of its two limbs, until the securing element is inside the round openings. Then, the hanger element is rotated into its final position.

One drawback of the known pipe hanger is that while it is being fitted the pipe or the like which is to be hung using the pipe hanger has to be lifted. This is very difficult in particular in the case of long and/or heavy pipes or the like, and is sometimes even impossible.

Another drawback of the known pipe hanger is that on account of the space which is required to lift the pipe or the like while the pipe hanger is being fitted, it is not possible for the pipe or the like to be moved into its final position with its top side close to the securing element. Consequently, in particular in the case of pipes or the like of relatively large dimensions, a relatively large amount of vertical space is required for hanging a pipe or the like.

The object of the invention is to provide an improved pipe hanger which eliminates one or more of the abovementioned drawbacks.

The object is achieved by a pipe hanger in accordance with the preamble of claim 1 which is characterized in that each limb is provided at the end with a head having two hook sections located on either side of the limb, and in that to receive each limb the securing element is provided with an opening which comprises an insertion part and a resting part, the width of the insertion part being greater than or equal to the width of the head, and the resting part being designed in such a manner that on either side of the resting part the hook sections of the head can hook onto the securing element, an elevation being arranged between the insertion part and the resting part on at least one side of the opening, which elevation is designed in such a manner that, when the hanger element is being hooked to the securing element, at least one hook section has to be moved over the elevation.

The width of the head is to be understood as meaning the dimension of the head between the ends of the two hook sections which are located furthest apart. The dimensions of the insertion part have to be such that they are greater than or equal to the width and thickness of the head, so that the latter can be moved through it substantially in a straight line.

With a pipe hanger of this type, it is possible to hook the hanger element to the securing element, while the hanger element remains in the same orientation as the final orientation of the hanger element. Furthermore, it is possible to secure a pipe to the support, without the pipe having to be lifted much higher than the height of its final position. This is because the pipe only has to be lifted high enough for it to be possible for the hook sections to be moved over the elevation or elevations.

Another advantage of the securing device according to the invention is that after the pipe has been secured, its top side is located close to the securing element. As a result, in relative terms less vertical space is required for hanging the pipe. Moreover, a more robust connection between pipe and support is obtained.

In one embodiment of the pipe hanger according to the invention, the securing element has two side sections and a higher central section, with the opening extending at least over a transition section between the central section and the respective side section, the transition section forming the elevation between an insertion part which lies at least partially in the central section and a resting part which lies at least partially in a side section. A pipe hanger of this type provides a particularly reliable coupling between the securing element and the hanger element.

In a further preferred embodiment, the transition from the resting part to the insertion part creates a shoulder on both sides of the opening, and each shoulder is arranged in the transition section from a side section to the higher central section, in such a manner that each shoulder forms an elevation. With an embodiment of the securing device of this type, there is no need to provide a separate elevation.

The securing element and the hanger element may advantageously each be formed from a substantially plate-like element, in particular a metal plate, making it simple to produce the securing element and/or hanger element.

Furthermore, the invention relates to a method for securing a pipe or the like to a support, in which use is made of one or more pipe hangers according to the invention. This method is described in claim 11.

The invention will be discussed below on the basis of a preferred embodiment of a pipe hanger according to the invention and with reference to the appended drawing, in which:
Figure 1 shows a perspective view of a pipe hanger according to the invention in combination with a pipe arranged therein;
Figure 2 shows a perspective view of a section of the securing element of the pipe hanger shown in Figure 1; and
Figure 3 shows a perspective view of a section of an alternative embodiment of a securing element according to the invention.

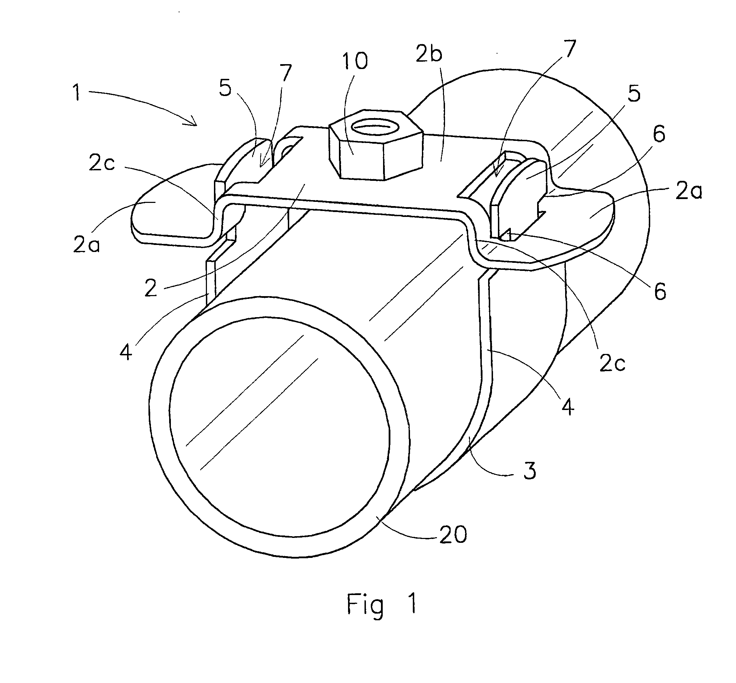

Figure 1 shows a pipe hanger according to the invention, which is denoted overall by reference numeral 1, in combination with a pipe 20 which is held in the pipe hanger 1. The pipe hanger 1 comprises a securing element 2 and a hanger element 3.

The hanger element 3 has two limbs 4 which each have a correspondingly designed head 5. Each head 5 has two hook sections 6 which are located on either side of the limb 4 and by means of which the hanger element 3 can be hooked to the securing element 2.

The hanger element shown in Figure 1 is produced from a single component. It is also possible to provide a hanger element which is assembled from two or more components, for example a round piece of steel to which two relatively short limbs, which are provided with the heads having hook sections, are secured by means of screws or by welding.

The securing element 1 has two side sections 2a and a higher central section 2b. The respective side sections 2a are connected to the higher central section 2b by means of the transition sections 2c.

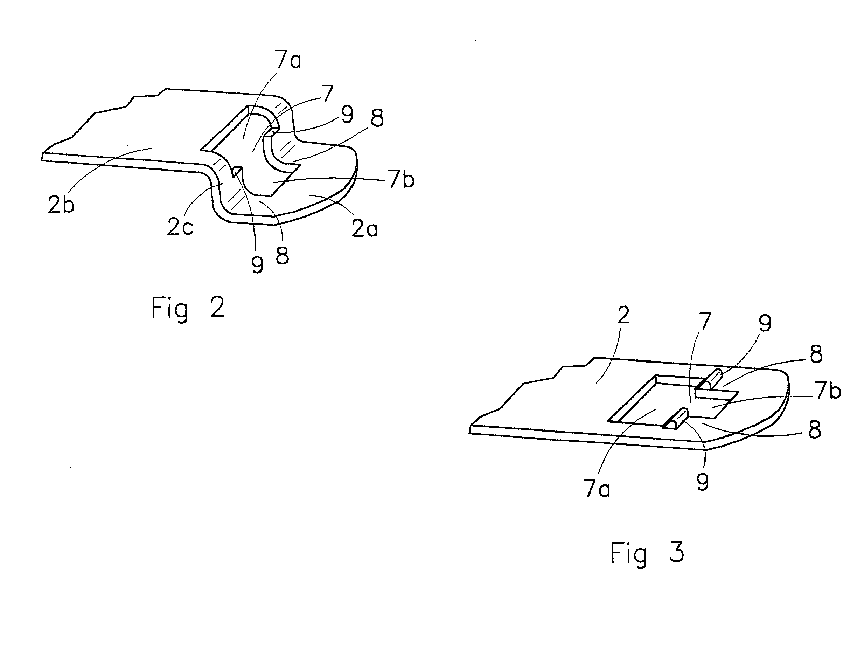

Two openings 7 are formed in the securing element 2. One of the openings 7 is clearly apparent from Figure 2. The second opening is designed mirror-symmetrically but otherwise in the same way as the first opening 7.

Each opening 7 comprises a rectangular insertion part 7a and a rectangular resting part 7b. The dimensions of the insertion part 7a are greater than or equal to the width and thickness of the head 5. The width of the head 5 is in this context to be understood as meaning the dimension of the head 5 between the ends of the two hook sections 6 which lie furthest apart. Therefore, the dimensions of the insertion part 7a of the opening 7 are such that the hook sections 6 of the head 5 can be moved through the insertion part 7a in a rectilinear motion.

The resting part 7b is designed in such a manner that hook-receiving regions 8, behind which the hook sections 6 of the head 5 can hook onto the securing element 2, are located on either side of the resting part 7b.

The transition from the resting part 7b to the insertion part 7a creates a shoulder 9 on either side of the opening. These shoulders 9 are arranged in the transition section 2c from a side section 2a to the higher central section 2b. Therefore, the shoulders 9 form an elevation between the resting part 7b and the insertion part 7a.

When the hanger element 3 is being hooked to the securing element 2, the hook sections 6 of the head 5 will be fitted through the insertion part 7a. Then, the head 5 will be moved sideways, with the two hook sections 6 of the head 5 being moved over the shoulders 9. Then, the hook sections 6 are lowered onto the hook-receiving regions 8. The presence of the elevations in the form of the shoulders 9 lock the head 5 of the hanger element 3 in position on the securing element 2.

To secure the securing element 2 to a support, a nut 10 is welded to the central section 2b, by means of which the securing element 2 can, for example, be secured to a stud secured to the support. As an alternative, it is also possible for the securing element to be provided with a stud and the support to be provided with a nut. Other suitable securing means for securing the securing element to a support can also be used.

It is advantageously possible for the distance between the two resting parts 7b to be made shorter than the distance between the limbs 4 of the hanger element 3 when the latter is in its stress-free state. If the hanger element 3 is then hooked to the securing element 2, the limbs 4 will be pushed in a direction away from the insertion parts 7a thereof into the resting parts 7b on account of the stress which occurs in the limbs as a result of the elastic deformation. This increases the reliability of the coupling between the securing element 2 and the hanger element 3 still further.

As an alternative to the elevations formed by the shoulders 9 as shown in Figures 1 and 2, according to the invention it is also possible to use other elevations which are arranged between the insertion part and the resting part in order to achieve the object of the invention. For example, if the securing element is formed as a flat plate in which the same openings 7 as in the preferred embodiment shown in Figure 1 are arranged, it is possible for an elevation to be arranged on either side of the opening, between the resting part and the insertion part, for example by flanging a section of the securing element 2, which flanged section ends up projecting above the surface of the securing element, or by means of a piece of welded-on metal. The latter alternative embodiment of the securing element is shown in Figure 3, in which identical components are denoted by identical reference numerals.

Furthermore, it is possible, as an alternative to the embodiment shown, for the insertion parts of the opening not to be positioned towards the centre of the securing element, i.e. closest together, and for the resting parts not to be positioned away from the centre of the securing element, but rather, instead, for one of the two openings to be designed in such a way that the position of the resting part and the insertion part with respect to one another is reversed.

In an embodiment of this type, in which the positioning of the insertion part and the resting part of the two openings is reversed, it is furthermore possible for the securing element to be designed in such a way that the side sections are at a higher level than the central sections. In this embodiment, furthermore, it may be advantageous for the distance between the resting parts to be greater than the distance between the limbs in the stress-free state, so that when the hanger element is hooked to the securing element, the tension in the hanger element causes the limbs in the resting parts to be pulled in a direction away from the insertion parts.

The securing element 2 according to the invention is simple to produce. In a first step, a plate-like base element is cut or stamped out of a plate, with the openings 7 being formed in the securing element 2 simultaneously or subsequently. After the openings 7 have been formed, the securing element 2 is bent in a bending operation, so that the side sections 2a, the central section 2b and the transition sections 2c are formed. Finally, a securing means, for example in the form of a nut 10, is fitted to the securing element, for example by welding.

It is also easy for the hanger element to be punched or cut out of a plate-like base element and then bent into its final shape as shown in Figure 1.

The securing element 2 and the hanger element 3 may be made from metal, plastic or other suitable materials.

The pipe 20 or the like can easily be secured to a support using two or more pipe hangers 1 according to the invention. In a first step, for each pipe hanger 1 which is to be used, a securing element 2 is secured to the support by means of the securing means 10.

In a subsequent step, the hanger elements 3 are fitted around the pipe. The pipe 20 can then already be held in its final position by the fitter or fitters or by a device which is designed for this purpose.

Then, the hanger elements 3 are hooked to the securing element 2 by the two heads 5 of the corresponding hanger element 3 being fitted, simultaneously or successively, through the respective insertion part 7a and being moved towards the associated resting part 7b, with the hook sections 6 of each head 5 moving over the elevations 9 and, on either side of the resting part 7b, hooking behind the hook-receiving regions 8 on the securing element 2.

In another method for securing a pipe 20, it is possible first of all for one of the limbs 4 of the hanger elements 3 which are to be secured to be hooked to the respective securing element 2, then to put the pipe 20 in place, and then to hook the second limb of the hanger elements to the securing element 2.

The above text has described a way of securing a pipe 20 or the like using two or more pipe hangers 3 according to the invention. Of course, it is also possible to use just one pipe hanger according to the invention, if appropriate in combination with other pipe-securing means.

## Claims

1. Pipe hanger (1) for supporting a pipe (20) or the like, comprising a securing element (2), which is to be secured to a support, and a substantially U-shaped hanger element (3) which has two limbs (4), each limb having one or more hook sections for hooking the limb to the securing element, **characterized in that** each limb is provided at the end with a head (5) having two hook sections (6) located on either side of the limb, and **in that** to receive each limb the securing element is provided with an opening (7) which comprises an insertion part (7a) and a resting part (7b), the width of the insertion part being greater than or equal to the width of the head, and the resting part being designed in such a manner that on either side of the resting part the hook sections of the head can hook onto the securing element, an elevation (9) being arranged between the insertion part and the resting part on at least one side of the opening, which elevation is designed in such a manner that, when the hanger element is being hooked to the securing element, at least one hook section has to be moved over the elevation.

2. Pipe hanger according to claim 1, **characterized in that** an elevation (9) is arranged between the insertion part (7a) and the resting part (7b) on both sides of the opening (7).

3. Pipe hanger according to claim 1 or 2, **characterized in that** the elevation (9) is formed by a section of the securing element (2) which is located at a higher level between the insertion part (7a) and the resting part (7b).

4. Pipe hanger according to one or more of claims 1-3, **characterized in that** the securing element (2) has two side sections (2a) and a higher central section (2b), the opening (7) extending at least over a transition section (2c) between the central section and the respective side section, the transition section (2c) forming the elevation (9) between an insertion part (7c) located in the central section and a resting part (7b) located in a side section.

5. Pipe hanger according to one or more of claims 1-4, **characterized in that** the securing element (2) and/or the hanger element (3) is formed from a plate-like base element.

6. Pipe hanger according to one of more of claims 1-5, **characterized in that** the insertion part (7a) and the resting part (7b) of the opening (7) are each rectangular.

7. Pipe hanger according to one or more of claims 1-6, **characterized in that** the transition from the resting part (7b) to the insertion part (7a) on either side of the opening (7) creates a shoulder (9), and **in that** each shoulder is arranged in the transition section (2c) from a side section (2a) to the higher central section (2b), in such a manner that each shoulder forms an elevation.

8. Pipe hanger according to one or more of claims 1-5, **characterized in that** the securing element (2) comprises securing means (10) for securing the securing element (2) to a support.

9. Pipe hanger according to claim 8, **characterized in that** the securing means (10) comprise a nut (10) which is welded to the securing element.

10. Pipe hanger according to claim 8, **characterized in that** the securing means comprise a stud.

11. Method for securing a pipe (20) or the like to a support, in which use is made of one or more pipe hangers (1) according to one or more of claims 1-10, comprising the steps of:
- securing the securing element (2) of each pipe hanger to the support by means of the securing means (10),
- placing the hanger element (3) of one or more of the pipe hangers around the pipe while the pipe is optionally being held in or close to its final position,
- hooking the hanger element to the securing element by simultaneously or successively fitting the two heads (5) of the limbs (4) of the hanger element through the insertion part (7a) and moving them towards the resting part (7b), with the hook sections (6) of each head moving over the one or more elevations (9) and hooking onto the securing element on either side of the resting part.

## Patentansprüche

1. Rohrabhängung (1) zum Tragen eines Rohres (20) oder dergleichen, umfassend ein Sicherungselement (2), das an einem Träger zu sichern ist, und ein im Wesentliches U-förmiges Aufhängungselement (3), das zwei Glieder (4) hat, wobei jedes Glied einen Hakenabschnitt oder mehrere Hakenabschnitte zum Einhaken des Gliedes in das Sicherungselement aufweist, **dadurch gekennzeichnet, dass** jedes Glied an dem Ende mit einem Kopf (5) versehen ist, der zwei Hakenabschnitte (6) aufweist, die auf jeder Seite des Gliedes angeordnet sind, und **dadurch**, dass das Sicherungselement, um jedes Glied aufzunehmen, mit einer Öffnung (7) versehen ist, die einen Einführungsteil (7a) und einen Auflageteil (7b) umfasst, die Breite des Einführungsteils größer als die Breite des Kopfes ist oder dieser entspricht und der Auflageteil so ausgelegt ist, dass sich die Hakenabschnitte des Kopfes auf beiden Seiten des Auflageteils auf dem Sicherungselement einhaken können und zwischen dem Einführungsteil und dem Auflageteil auf wenigstens einer Seite der Öffnung eine Erhöhung (9) eingerichtet ist, wobei die Erhöhung so ausgelegt ist, dass, wenn das Aufhängungselement in das Sicherungselement eingehakt ist, wenigstens ein Hakenabschnitt über die Erhöhung bewegt werden muss.

2. Rohrabhängung nach Anspruch 1, **dadurch gekennzeichnet, dass** zwischen dem Einführungsteil (7a) und dem Auflageteil (7b) auf beiden Seiten von der Öffnung (7) eine Erhöhung (9) eingerichtet ist.

3. Rohrabhängung nach Anspruch 1 oder 2, **dadurch gekennzeichnet, dass** die Erhöhung (9) durch einen Abschnitt des Sicherungselements (2) gebildet wird, der auf einer höheren Ebene zwischen dem Einführungsteil (7a) und dem Auflageteil (7b) angeordnet ist.

4. Rohrabhängung nach einem oder mehreren der Ansprüche 1 bis 3, **dadurch gekennzeichnet, dass** das Sicherungselement (2) zwei Seitenabschnitte (2a) und einen höheren Mittelabschnitt (2b) hat, sich die Öffnung (7) wenigstens über einen Übergangsabschnitt (2c) zwischen dem Hauptabschnitt und dem entsprechenden Seitenabschnitt erstreckt und der Übergangsabschnitt (2c) zwischen einem in dem Hauptabschnitt angeordneten Einführungsteil (7c) und einem in einem Seitenabschnitt angeordneten Auflageteil (7b) die Erhöhung (9) bildet.

5. Rohrabhängung nach einem oder mehreren der Ansprüche 1 bis 4, **dadurch gekennzeichnet, dass** das Sicherungselement (2) und/oder das Aufhängungselement (3) aus einem plattenartigen Grundelement gebildet ist bzw. sind.

6. Rohrabhängung nach einem oder mehreren der Ansprüche 1 bis 5, **dadurch gekennzeichnet, dass** der Einführungsteil (7a) und der Auflageteil (7b) der Öffnung (7) jeweils rechteckig sind.

7. Rohrabhängung nach einem oder mehreren der Ansprüche 1 bis 6, **dadurch gekennzeichnet, dass** der Übergang von dem Auflageteil (7b) zu dem Einführungsteil (7a) auf beiden Seiten der Öffnung (7) eine Schulter (9) erzeugt und **dadurch**, dass jede Schulter in dem Übergangsabschnitt (2c) von einem Seitenabschnitt (2a) zu dem höheren Hauptabschnitt (2b) so eingerichtet ist, dass jede Schulter eine Erhöhung bildet.

8. Rohrabhängung nach einem oder mehreren der Ansprüche 1 bis 5, **dadurch gekennzeichnet, dass** das Sicherungselement (2) Sicherungseinrichtungen (10) zum Sichern des Sicherungselements (2) an einem Träger umfasst.

9. Rohrabhängung nach Anspruch 8, **dadurch gekennzeichnet, dass** die Sicherungseinrichtungen (10) eine Mutter (10) umfassen, die an das Sicherungselement geschweißt ist.

10. Rohrabhängung nach Anspruch 8, **dadurch gekennzeichnet, dass** die Sicherungseinrichtungen einen Bolzen umfassen.

11. Verfahren zum Sichern eines Rohres (20) oder dergleichen an einem Träger, in dem eine Rohrabhängung oder mehrere Rohrabhängungen (1) nach einem oder mehreren der Ansprüche 1 bis 10 zur Anwendung kommt bzw. kommen, die folgenden Schritte umfassend:
Sichern jedes Sicherungselements (2) jeder Rohrabhängung an dem Träger mittels der Sicherungseinrichtungen (10);
Platzieren des Aufhängungselements (3) von einer oder mehreren der Rohrabhängungen um das Rohr, wobei das Rohr optional in seiner endgültigen Position oder nahe seiner endgültigen Position gehalten wird, und
Haken des Aufhängungselements in das Sicherungselement durch gleichzeitiges oder aufeinanderfolgendes Einsetzen der zwei Köpfe (5) der Glieder (4) des Aufhängungselements durch den Einführungsteil (7a) und Bewegen derselben in Richtung auf den Auflageteil (7b), wobei sich die Hakenabschnitte (6) jedes Kopfes über die eine Erhöhung (9) oder mehrere Erhöhungen (9) bewegen und auf dem Sicherungselement auf jeder Seite des Auflageteils einhaken.

## Revendications

1. Support pour tuyaux (1) prévu pour supporter un tuyau (20) ou similaire, comprenant un élément de fixation (2), à fixer à un support, et un élément de suspension (3) sensiblement en forme de U comportant deux ailes (4), chaque aile présentant une ou plusieurs parties à crochet afin d'accrocher l'aile à l'élément de fixation, **caractérisé en ce que** chaque aile est pourvue à son extrémité d'une tête (5) comportant deux parties à crochet (6) situées de chaque côté de l'aile, et **en ce que** pour recevoir chaque aile l'élément de fixation est pourvu d'une ouverture (7) qui comprend une partie d'insertion (7a) et une partie de repos (7b), la largeur de la partie d'insertion étant supérieure ou égale à la largeur de la tête, et la partie de repos étant configurée de telle manière que sur chaque côté de la partie de repos les parties à crochet de la tête puissent s'accrocher sur l'élément de fixation, une surélévation (9) étant ménagée entre la partie d'insertion et la partie de repos sur au moins un côté de l'ouverture, ladite surélévation étant prévue de telle manière que, lorsque l'élément de suspension doit être accroché à l'élément de fixation, au moins une partie à crochet doit être déplacée par dessus la surélévation.

2. Support pour tuyaux selon la revendication 1, **caractérisé en ce qu'**une surélévation (9) est ménagée entre la partie d'insertion (7a) et la partie de repos (7b) de chaque côté de l'ouverture (7).

3. Support pour tuyaux selon la revendication 1 ou 2, **caractérisé en ce que** la surélévation (9) est formée par une partie de l'élément de fixation (2) qui est situé à un niveau plus élevé entre la partie d'insertion (7a) et la partie de repos (7b).

4. Support pour tuyaux selon une ou plusieurs des revendications 1-3, **caractérisé en ce que** l'élément de fixation (2) présente deux parties latérales (2a) et une partie centrale plus haute (2b), l'ouverture (7) s'étendant au moins par dessus une partie de transition (2c) située entre la partie centrale et la partie latérale respective, la partie de transition (2c) formant la surélévation (9) définie entre une partie d'insertion (7c) située dans la partie centrale et une partie de repos (7b) située dans une partie latérale.

5. Support pour tuyaux selon une ou plusieurs des revendications 1-4, **caractérisé en ce que** l'élément de fixation (2) et/ou l'élément de suspension (3) est formé à partir d'un élément de base en forme de plaque.

6. Support pour tuyaux selon une ou plusieurs des revendications 1-5, **caractérisé en ce que** la partie d'insertion (7a) et la partie de repos (7b) de l'ouverture (7) sont chacune rectangulaire.

7. Support pour tuyaux selon une ou plusieurs des revendications 1-6, **caractérisé en ce que** la transition de la partie de repos (7b) à la partie d'insertion (7a) de chaque côté de l'ouverture (7) crée un épaulement (9), et **en ce que** chaque épaulement est ménagé dans la partie de transition (2c) entre une partie latérale (2a) et la partie centrale plus haute (2b), de telle manière que chaque épaulement forme une surélévation.

8. Support pour tuyaux selon une ou plusieurs des revendications 1-5, **caractérisé en ce que** l'élément de fixation (2) comprend des moyens de fixation (10) pour fixer l'élément de fixation (2) au support.

9. Support pour tuyaux selon la revendication 8, **caractérisé en ce que** les moyens de fixation (10) sont constitués d'un écrou (10) qui est soudé à l'élément de fixation.

10. Support pour tuyaux selon la revendication 8, **caractérisé en ce que** les moyens de fixation sont constitués d'une tige.

11. Procédé de fixation d'un tuyau (20) ou similaire à un support, dans lequel on utilise un ou plusieurs supports pour tuyaux (1) conformes à une ou plusieurs des revendications 1-10, comprenant les étapes suivantes :
- fixer l'élément de fixation (2) de chaque support pour tuyaux au support à l'aide des moyens de fixation (10) ;
- placer l'élément de suspension (3) d'un ou de plusieurs supports pour tuyaux autour du tuyau tandis que le tuyau est optionnellement maintenu dans sa position finale ou dans une position proche de celle-ci ;
- accrocher l'élément de suspension à l'élément de fixation en introduisant simultanément ou successivement les deux têtes (5) des ailes (4) de l'élément de suspension à travers la partie d'insertion (7a) et en les déplaçant vers la partie de repos (7b), les parties à crochet (6) de chaque tête se déplaçant au dessus d'une ou de plusieurs surélévations (9) et s'accrochant sur l'élément de fixation de chaque côté de la partie de repos.
